# EUROPEAN PATENT SPECIFICATION

(11) **EP 4 460 612 B1**
(45) Date of publication and mention of the grant of the patent: **28.10.2026**
(21) Application number: 23703104.2
(22) Date of filing: 04.01.2023
(51) Int. Cl.: E06B 3/673

(54) **APPARATUS FOR PRODUCING INSULATING GLASS, AND METHOD FOR THE THERMAL CONDITIONING OF A THERMOPLASTIC SPACER**
VORRICHTUNG ZUR HERSTELLUNG VON ISOLIERGLAS UND VERFAHREN ZUR THERMISCHEN KONDITIONIERUNG EINES THERMOPLASTISCHEN ABSTANDHALTERS
APPAREIL DE PRODUCTION DE VITRAGE ISOLANT ET PROCÉDÉ DE CONDITIONNEMENT THERMIQUE D'UNE CLOISON THERMOPLASTIQUE

(30) Priority: 05.01.2022 IT 202200000140
(43) Date of publication of application: 13.11.2024
(73) Proprietor: Forel S.P.A. Unipersonale, 31056 Roncade, Treviso (IT)
(72) Inventor: VIANELLO, Fortunato, 31056 Roncade, Treviso (IT); VIANELLO, Riccardo, 31056 Roncade, Treviso (IT)
(74) Representative: Busana, Omar
(86) International application number: PCT/IB2023/050042
(87) International publication number: WO 2023/131876

(56) References cited:
- EP-A2- 0 727 556
- KR-B1- 100 828 202
- US-A- 6 068 720
- US-B1- 6 491 966

## Description

### FIELD OF APPLICATION

The present invention relates to an apparatus for producing insulating glass, and a method for the thermal conditioning of thermoplastic spacer. In particular, the present invention relates to the thermal conditioning of a thermoplastic spacer after its application to at least a first glass sheet, and before the subsequent steps of assembly with at least a second glass sheet, possible gas filling, and pressing to obtain the insulating glass.

### PRIOR ART

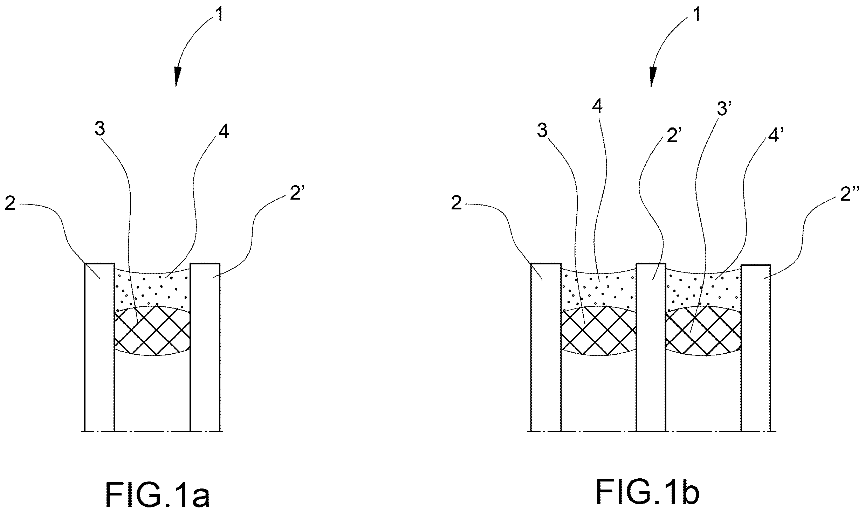

As is well known, insulating glass is formed in its simplest configuration (see in this regard figure 1A) of two glass sheets 2 and 2' separated by a spacer 3 that may be rigid, i.e., made of metal or plastic or mixed metal-plastic material, or flexible material supplied in coils or, lastly, made of thermoplastic material supplied in drums and extruded directly onto the glass by automatic machines. Document EP 0 727 556 A2 discloses an apparatus for producing insulating glass comprising a thermoplastic spacer.

The present invention relates to the case of use of the thermoplastic spacer for which it is known to carry out its deposition on a glass sheet 2', and its subsequent coupling with another glass sheet 2, with the assembly then being sealed over the entire outer perimeter with a secondary sealant 4, to form the so-called insulating glass 1.

As shown in figure 1B, the operation may also be performed in multiple to obtain, for example, insulating glass 1 consisting of three glass sheets 2, 2', 2'' and two spacers 3, 3', as well as "n" glass sheets 2, 2', 2'', etc. and "n-1" spacers 3, 3', etc.

For easy understanding of the following, it is useful to keep in mind that the rheological characteristics of the thermoplastic material are affected by temperature. Specifically, as temperature decreases, the viscosity of the thermoplastic material increases, while the ability to deform when subjected to stress decreases.

In addition, the extrusion of the thermoplastic material, according to the manufacturers' instructions, should take place at a temperature close to 130°C.

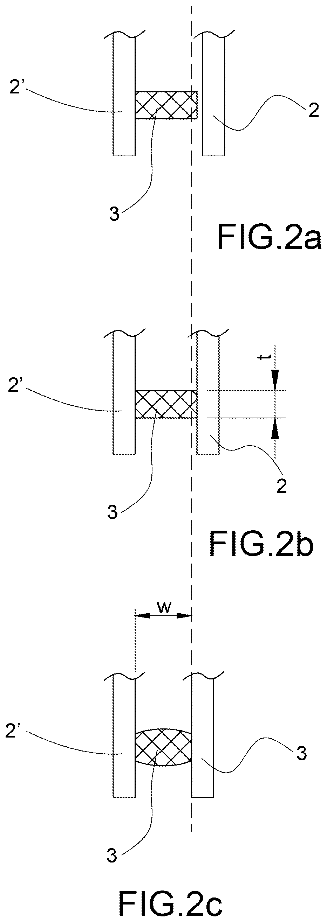

Preferably, the cross-section of the spacer profile, at the time of its extrusion onto the glass, is rectangular, and to ensure adequate adhesion between the spacer and the glass, it is prescribed that the application takes place in such a way that the size of the bead deposited on the glass, in the direction perpendicular to the glass itself, is about 10% (up to 12%) greater than the desired final size, this proportion being achieved by the steps of assembly and pressing of the insulating glass. As a result, the spacer section assumes, in the final configuration, the typical slightly convex shape of the sides not in contact with the glass, as seen, with exaggerated representation, in figures 1A, 1B and 2C.

From the above, and considering the production rates of modern insulating glass production lines (generally, little more than a minute elapses between the spacer application step and the unloading of the finished product), it can be understood that the thermoplastic spacer arrives at the unloading station at such a temperature that it cannot withstand any load without undesirable deformation, which compromises the quality of the finished product. It should also be noted that, at the time of unloading, not even the secondary sealant is able to withstand the loads to which the product is subjected by the usual operations of gripping, lifting, transporting and storing on special supports or stands.

In practice, the operator must adopt appropriate gripping arrangements and means in order to proceed with the unloading of the finished products. In particular, the means used for unloading, in addition to a gripping device (typically consisting of suction cups) that acts on the side face of the glass sheet that is presented on the operator's side, must be equipped with lower supports suitable for supporting the weight of all the glass sheets that make up the insulating glass. In fact, in the absence of an adequate lower support, the weight alone is capable of deforming the product and making it not conform to specifications, due to the viscous sliding of the spacer and the inconsistency of the secondary sealant, which is not yet in a state to resist the stress.

The time required for the secondary sealant and for the spacer to allow handling of the insulating glass without special precautions is in the order of some hours for catalysis of the secondary sealant, and some days for the transformation of the spacer material from thermoplastic to elastomeric, therefore storage in special and dedicated devices is also necessary.

The problem described has been addressed, for example, in European patent application EP 2959087, which proposes a device for unloading insulating glass that is capable of appropriately supporting the glass sheets and of implementing the storage on special stands also suitable for appropriately supporting the glass sheets, without inducing stresses in the spacer and in the secondary sealant. The result, while effective, is a complex, expensive system that takes up a very large area on the ground.

But let's get to the main problem not solved by the prior art.

As stated above, the thermoplastic spacer is deposited on one of the glass sheets that will make up the insulating glass, with more material than is strictly necessary to create the desired spacing between the glass sheets. This need is explained by considering that the surface of the glass, at the microscopic level, is not perfectly smooth, but rather consists of micro ripples with "peaks" and "valleys": the thermoplastic material that comes into contact with the glass, in order to achieve good initial adhesion, must be placed in a condition to penetrate the "valleys" and not only to lap the peaks of the glass surface. The surplus material deposited during extrusion serves specifically so that, through compression thereof to reach the desired final height, the layer closest to the glass is "pushed" or "forced" against the interstices of the glass surface. Obviously, such pressure exerted by the material against the glass is conveniently greater if its viscosity is higher, that is to say, if its temperature is lower.

Attempts have also been made by increasing the amount of extruded material, i.e., by increasing the excess material deposited on the glass, to achieve greater crushing thereof against the glass during the assembly and pressing steps, however, it has been found that this solution results in greater deformation of the spacer bead transverse to the closing and pressing motion, thereby not solving the problem. It is also added that more material is used in this way, resulting in an increase in production costs.

It should be noted that, during the extrusion of the material directly onto the glass, the pressure effect exerted by the nozzle itself on the material, coupled with the low viscosity of the material given the high temperature, induce the thermoplastic material to creep effectively down to the depth of the "valleys" of the glass surface. Such effectiveness, however, may not be used for the opposite side of contact between the bead of thermoplastic material and the second glass sheet, because otherwise the bead would not have a suitable consistency for the steps following the coupling.

There are also at least two situations that find advantage in a thermoplastic bead temperature lower than that resulting from the usual production rates of modern automated insulating glass production lines.

The first situation relates to the case of using one or more panes with non-planar geometry: while in the pressing steps the non-planar pane is forcibly returned to a perfectly planar condition by the action of closing the press platens, and once this operation is completed, the insulating glass thus subjected to tension may undergo deformation due to the springback of the glass sheet that had a non-planar geometry, resulting in the loss of the correct dimensions. This phenomenon is all the more hindered the higher the viscosity of the spacer, that is to say the lower its temperature.

The second situation relates to the step following the secondary sealing of the perimeter edge of the insulating glass: a higher viscosity of the spacer makes it possible to facilitate unloading and handling, reducing deformation caused by the loads induced on the spacer during such operations.

Thus, considering an automatic insulating glass production line using the thermoplastic spacer, there are two conflicting requirements: on the one hand, in the extrusion step of the bead of thermoplastic material onto the glass, a sufficiently high temperature is required to allow the material to be taken from the drum, transported, dosed and applied to the glass; on the other hand, in the subsequent step of assembly and pressing, an excessively high temperature corresponds to a viscosity that is not optimal to ensure the desired penetration of the material into the interstices of the glass surface.

Decreasing the extrusion temperature for the purpose of increasing the viscosity in the assembly and pressing step and subsequent steps is not feasible because it would undermine the already difficult transport and extrusion step for this type of material with very high viscosity, and also would impair penetration into the depth of the "valleys" of the glass surface.

One viable solution is to allow the material to cool, that is to say to insert a waiting time in the production cycle between the above steps (basically extrusion and pressing step) for natural heat dissipation. However, inserting a waiting time in the production cycle for the thermoplastic material to cool results in a substantial loss of productivity of the insulating glass production apparatus.

In addition to this, solutions that consist of creating forced air convection, such as directing a flow of air against the bead deposited on the glass, does not lead to relevant reductions in the temperature of the bead, as the bead itself consists of material that is, by its nature, insulating, with a high heat capacity and low thermal conductivity, and therefore with such methods only surface cooling may be achieved, leaving the interior of the material at a high temperature and still with insufficient viscosity for the intended purpose.

Other apparatuses are also known described for example in KR 100 828 202 B1, which comprise a plurality of initial stations for the sheets, located at the entrance of the apparatus, which are used according to the type of sheet. Their arrangement does not arise from problems just described relating to the thermoplastic spacer, so that they are not used for sheets on which a thermoplastic spacer is arranged.

In 5 EP 0 727 556 A2 an apparatus is described with conveyors split at the station in which the thermoplastic spacer is distributed. This way, the glass sheets where it does not have to be distributed the thermoplastic material can easily access the next station, while the thermoplastic material is distributed on a previous sheet. This type of apparatus does not solve the drawbacks relating to the thermoplastic spacer which have been highlighted above.

### DISCLOSURE OF THE INVENTION

The object of this invention is therefore that of overcoming, at least in part, the disadvantages of the prior art mentioned above.

A first object of the present invention is to eliminate the drawbacks attributed to the prior art, with a unit, an apparatus, and a method capable of allowing the thermoplastic material bead to have the best rheological characteristics during application to the glass and to achieve the best rheological conditions prior to the subsequent steps of assembly, pressing, secondary sealing, and unloading of the insulating glass.

Therefore, one object in this scope is also not to change the correct extrusion parameters of the material, that is to say to maintain the correct temperature of the material for transporting, dosing and extrusion operations.

Moreover, an additional object is to maintain a high productivity of the automatic insulating glass production line.

A further object of the present invention is also to reduce production costs by reducing the amount of thermoplastic material used to create the spacer.

In addition, it is the object of the present invention to reduce the deformation of the insulating glass caused by the springback of glass sheets used in its manufacture and which originally had a non-planar geometry.

A further object of the present invention is to facilitate the operations of unloading of insulating glass produced with thermoplastic spacer on automatic lines with high production rate.

Lastly, it is also intended to reduce the period of time that is required for the insulating glass sheets to be parked before they are able to be handled and transported without the special precautions described above.

These requirements are met, at least partially, by an apparatus for producing insulating glass according to claim 1, and by a method for the thermal conditioning of a thermoplastic spacer according to claim 21.

### DESCRIPTION OF THE DRAWINGS

Further features and advantages of this invention will become more apparent from the following detailed description of preferred, non-limiting embodiments thereof, in which:
- figure 1A shows in schematic form the section of an insulating glass 1 near the perimeter edge with the noticeable glass sheets 2 and 2', the thermoplastic spacer 3 and the secondary sealant 4 evident;
- figure 1B shows in schematic form the section of an insulating glass 1 formed of the glass sheets 2, 2' and 2", the thermoplastic spacers 3 and 3' and the secondary sealant 4 and 4';
- figures 2A - 2C schematically show the steps of a method for producing insulating glass 1 using a thermoplastic spacer 3;
- figure 3 shows in schematic form a front view of a portion of an apparatus according to a possible embodiment of the present invention;
- figure 4 shows in schematic form a view of the lower part of the portion of the apparatus of figure 3;
- figure 5 shows in schematic form a view from the front of a possible embodiment of a portion of an apparatus according to the present invention; and
- figure 6 shows in schematic form an insulating glass production apparatus according to a possible embodiment of the present invention.

### DESCRIPTION OF AN EMBODIMENT

Figure 1A shows a typical configuration of insulating glass 1 formed of two glass sheets 2 and 2' and a spacer 3 made of thermoplastic material extruded directly onto one of the panes; also noted is the secondary sealant 4 having the function of joining together the two glass sheets 2 and 2' with the spacer 3 and giving consistency and solidity to the finished product as well as helping to prevent gas and moisture exchange between the outside and inside of the insulating glass 1, these being properties already carried out, primarily, by the spacer 3. Figure 1B illustrates another typical configuration of insulating glass 1 with thermoplastic spacer 3, namely the case of glass consisting of three glass sheets 2, 2' and 2" and two spacers 3 and 3' to form triple insulating glass.

Figures 2A to 2C illustrate the production steps of an insulating glass 1 consisting of two glass sheets 2 and 2' and a thermoplastic spacer 3. Specifically, figure 2A shows the condition with the spacer 3 applied to the glass sheet 2' and the glass sheet 2 positioned opposite, ready for the eventual introduction of gas other than air. The vertical dashed line indicates the final position of the glass sheet 2 after assembly and pressing, and highlights the surplus material that must be deposited during the extrusion step of the thermoplastic material bead. Figure 2B shows the situation in which the glass sheet 2 has come in contact with the thermoplastic material bead, but has not yet reached the final dimension corresponding to the desired nominal size "w" as the distance between the two glass sheets 2' and 2. Figure 2C shows the final state in which the two glass sheets are facing one another at the desired distance and the spacer 3 has been compressed and deformed due to the surplus material used in the step of its extrusion onto the glass sheet 2', thus assuming the well-known convex form seen exaggerated in the figure.

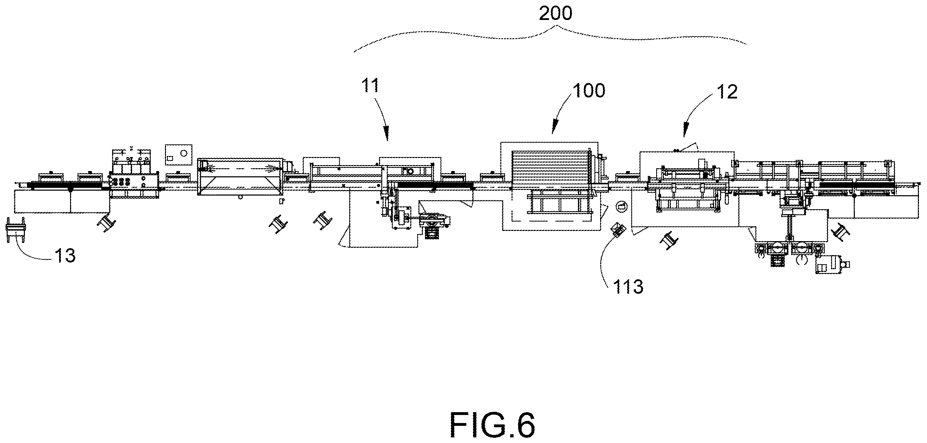

Figure 6 shows an apparatus for producing insulating glass which is indicated globally with reference 200.

The apparatus 200 comprises a distribution unit 11 of thermoplastic spacer 3, a sheet coupling unit 12, and a conditioning unit 100.

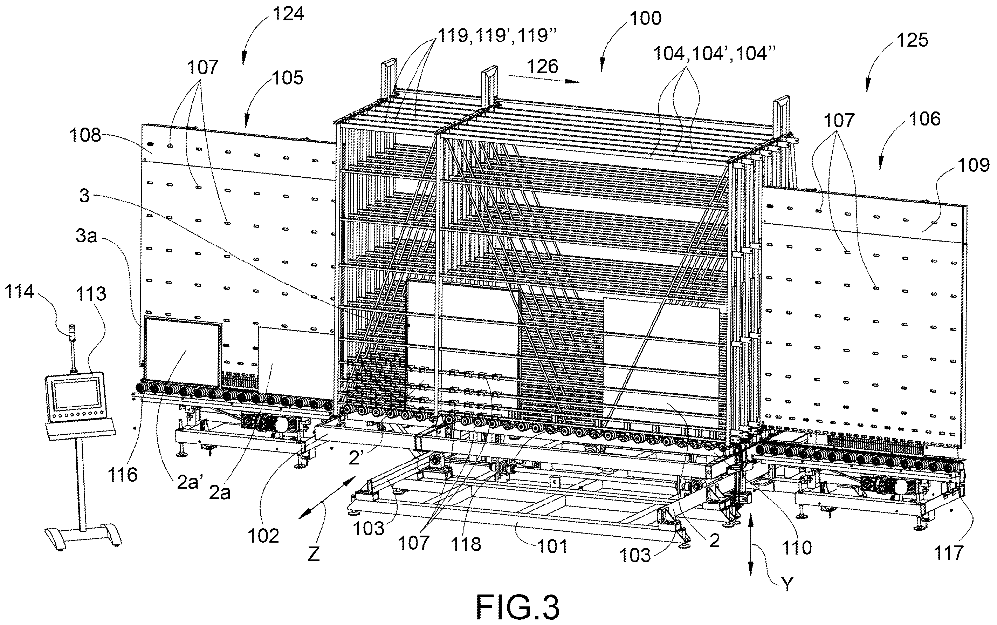

Figure 3 shows, in axonometric view, a thermal conditioning unit 100 for a thermoplastic spacer deposited on a glass sheet 2'.

The thermal conditioning unit 100 for a thermoplastic spacer for insulating glass 1 comprises an inlet area 124 for glass sheets 2, 2', 2'' not yet coupled and possibly provided with thermoplastic spacer 3, and an outlet area 125 for glass sheets 2, 2', 2''.

As seen in figure 3, the inlet area 124 and the outlet area 125 define a transit direction 126 for the sheets 2, 2', 2''.

The unit 100 also comprises a fixed frame 101 and a movable frame 102 adapted to be moved with respect to the fixed frame 101 in a direction substantially perpendicular to the transit direction 126.

A plurality of compartments 104, 104', 104'' adapted to house the glass sheets 2, 2', 2" is provided on the movable frame 102. In the present discussion, only three compartments 104, 104', 104'' will be indicated by numerical references in each case, as expressly indicated; more than three compartments may also be provided.

The movable frame 102 is adapted to position each compartment of said plurality of compartments 104, 104', 104" in line with the inlet area 124 and the outlet area 125 for the glass sheets 2, 2', 2''.

As seen in figure 3, the fixed frame 101 allows the unit to be fixed to the ground, for example.

In accordance with a possible embodiment, the inlet area 124 may comprise an inlet conveyor 105 for the support and transport of glass sheets 2, 2', 2'' and the outlet area 125 may comprise an outlet conveyor 106 for the support and transport of glass sheets 2, 2', 2''.

The inlet conveyor 105 and the outlet conveyor 106 may be of a type known per se to a person skilled in the art.

Specifically, the inlet conveyor 105 and outlet conveyor 106 may comprise a plurality of motorized rollers 116, 117 respectively, for supporting and moving the glass sheets 2, 2', 2'', and a lateral support structure 108, 109 for a face of said glass sheets 2, 2', 2", comprising a plurality of wheels 107 adapted to allow the sliding of the glass sheets 2, 2', 2" according to a direction substantially parallel to the transit direction 126.

As is well known, the wheels 107 define a vertical or near-vertical plane for the sheet 2, 2', 2'' so that the sheet may be rested there with one of its faces, so that the sheet may be transported without falling.

The movable frame 102 may be arranged on the fixed frame by means of a system of guides 103 on which the movable frame 102 may slide. As shown in figure 3, the guides 103 may be two in number, for example, one of which is near the inlet area 124 and one near the outlet area 125.

The movement means used to move the movable frame 102 may be of a type known per se, such as an electric motor coupled with transmission parts.

In accordance with a possible embodiment form, each compartment 104, 104', 104'' may comprise fixed supports 118 adapted to support the glass sheets 2, 2', 2'' from below. In addition, each compartment 104, 104', 104'' may comprise a lateral support structure 119, 119', 119'' for one face of the glass sheets 2, 2', 2'', comprising a plurality of wheels 107 adapted to allow the glass sheets 2, 2', 2" to slide according to a direction substantially parallel to the transit direction 126.

As can be seen in the example in figure 3, the support structure 119 with the associated wheels 107 may define a plane substantially parallel to the plane defined by the lateral support structures 108, 109 of the inlet conveyor 105 and outlet conveyor 106.

With reference to figure 3, the compartments 104, 104', 104" may be adjacent to each other along a direction substantially perpendicular to the transit direction 126. In accordance with a possible embodiment, the compartments 104, 104', 104'' may comprise a frame structure with tubular-type elements.

Due to the movement of the movable frame, each compartment 104, 104', 104', and in particular each support structure of said compartments 119, 119', 119", may be made substantially coplanar with the lateral support structures 108, 109 of the inlet conveyor 105 and the outlet conveyor 106.

According to one possible embodiment, the lateral support structures 108, 109 of the inlet conveyor 105 and the outlet conveyor 106 may also not be coplanar, but parallel, and the movable frame 102 and thus the compartments 104, 104', 104'' may be used to feed the outlet conveyor 106 with the plates coming from the inlet conveyor 105.

In accordance with a possible embodiment, the unit 100 may comprise a transport device 110 for moving the sheets 2, 2', 2" from the inlet area 124 to the outlet area 125 in a direction substantially parallel to the transit direction 126.

The transport device 110 may be arranged on the fixed frame 101 by means of movement means 111 adapted to move the transport device 110 between an engagement position in which it is adapted to lift at least one sheet 2, 2', 2'' and move it along the transit direction 126, and a rest position in which it does not interact with said at least one sheet 2, 2', 2''. Thus, on the one hand, only one movement system may be used for the sheets present on the unit, and on the other hand, movement in a direction perpendicular to the transit direction 126 is allowed to align a given compartment 104, 104', 104" with the inlet area or outlet area.

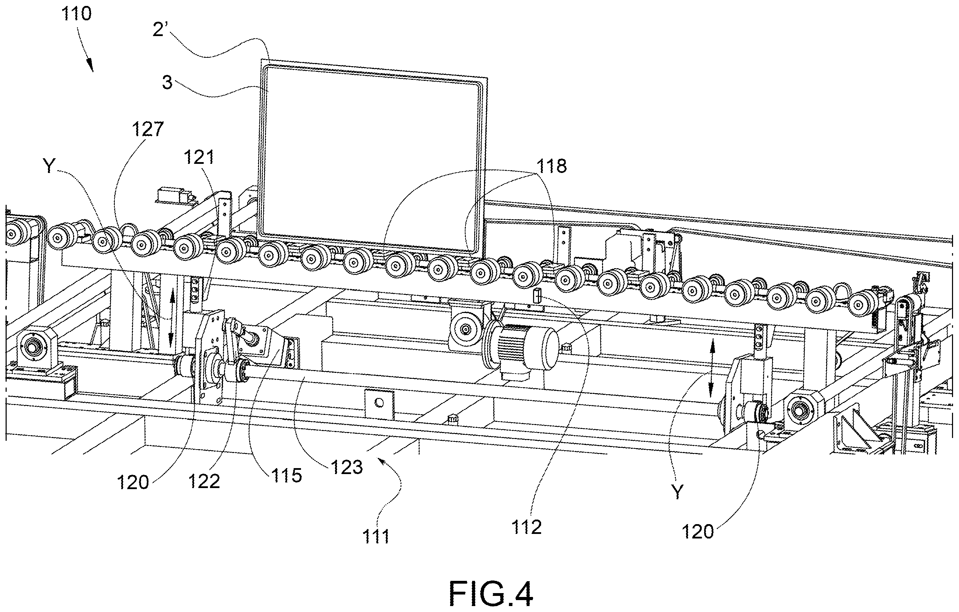

In accordance with a possible embodiment, which is seen for example in figure 4, the movement means 111 may comprise at least one linear actuator 115, anchored at an end to the fixed frame 101 and at a second end to a lever 122 acting on a torsion bar 123 having a fixed axis of rotation. At least one toothed wheel 120 is keyed to the torsion bar 123 to drive at least one corresponding rack 121 arranged on the transport device 110. The rack 121 is arranged according to a direction substantially parallel to the direction along which the transport device 110 is moved.

Preferably, as seen in figure 4, the torsion bar 123 may be arranged with two toothed wheels 120 keyed to the ends of the torsion bar 123, acting on respective racks 121.

Thus, an extension of the linear actuator (for example a pneumatic cylinder) comprises a rotation of the lever 122 and thus of the toothed wheels 120 via the torsion bar 123. Since the axis of rotation of the torsion bar 123 is fixed, rotation of the toothed wheels 120 causes movement of the racks 121 and thus of the transport device 110.

In accordance with alternative embodiments, the means of movement 111 may be realized differently, for example with a linear actuator acting directly on the transport device 110.

By means of the movement means 111, the transport device 110 is raised along the Y-axis, substantially vertical, in the active position with the rollers 127 above the fixed supports 118 so that the glass sheets 2, 2', 2'', which are within the various compartments 104, 104', 104", may be moved when they are aligned with the inlet area 124 and/or outlet area 125, along the transit direction 126, and lowered along Y to an inactive and release position to allow the movement of the compartments 104, 104', 104", along the Z-axis (direction perpendicular to the transit direction 126) and then be positioned successively and alternately in line with the inlet area 124 and outlet area 125, for loading and unloading of the glass sheets 2, 2', 2".

In accordance with a possible embodiment, each compartment 104, 104', 104'' may be provided with at least one temperature sensor 112 adapted to measure the temperature of a thermoplastic spacer 3 of a glass sheet 2', 2'' provided within the compartment 104, 104', 104". Advantageously, the at least one temperature sensor 112 may be an infrared sensor.

The at least one temperature sensor 112 may be positioned near the fixed supports 118 and is therefore adapted to detect a temperature value of the thermoplastic spacer 3 near the lower edge of the sheet 2', 2". In this way, since each sheet must necessarily rest on the fixed supports, it is possible to detect a temperature datum whatever the size of the sheet 2', 2".

According to one possible embodiment, the unit 100 may comprise an ambient temperature sensor 114, which is adapted to measure the temperature of the environment in which the unit 100 is set up. In this way, the parked time of each glass sheet may be adapted according to the parameter that most affects the problem addressed.

The unit 100 may comprise a local control unit 113 operatively connected to the transport device 110 and/or to the movement means 111 and/or to the at least one temperature sensor 112 and/or to the ambient temperature sensor 114. The local control unit 113 may be programmed for the management of the operating parameters of the conditioning unit 100.

The local control unit 113 may be programmed to set the residence time of a sheet 2, 2', 2'' in one of the compartments 104, 104', 104'' based on operator-entered operating parameters and/or predetermined times.

In particular, the local control unit 113 may be programmed to calculate, based on the temperature value detected by said at least one infrared temperature sensor 112 and/or said ambient temperature sensor 114, the residence time of a sheet 2', 2'' in one of said compartments 104 so that the spacer 3 reaches a certain temperature value.

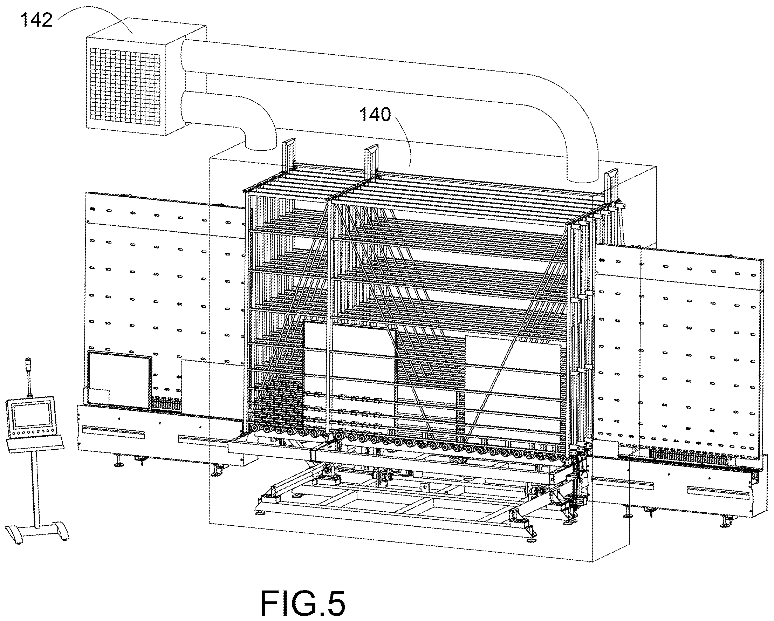

In figure 5, a thermal conditioning unit 100 provided with a climatic chamber 140 is shown in schematic form.

Automatic insulating-glass production apparatuses are very well known both to persons skilled in the art and to those less qualified, but suitably trained, and therefore in the following only the operations of loading of the glass sheets, parking and unloading are described, these being performed by the thermal conditioning unit 100 as indicated above and forming the specific subject of the present invention.

The description and the figures above relate to a thermal conditioning unit 100 arranged according to a process flow from left to right; it is easy to imagine a description and corresponding figures in the case of mirrored or otherwise different layouts, for example including a change in the direction of the line.

Specifically, the apparatus includes a distribution unit 11 of thermoplastic spacers 3, and a sheet coupling unit 12, between which the thermal conditioning unit 100 is arranged.

In accordance with a possible embodiment, the apparatus may comprise an apparatus control unit 13, operatively connected to said distribution unit 11 for thermoplastic spacers 3, to said sheet coupling unit 12, and to said thermal conditioning unit 100.

The apparatus control unit 13 may be programmed to calculate, based on the temperature value detected by said at least one infrared temperature sensor 112 and/or said ambient temperature sensor 114, the residence time of a sheet 2', 2'' in one of said compartments 104, 104', 104'', etc., so that the spacer 3 reaches a certain temperature value. Advantageously, the apparatus control unit 13 may be arranged in addition to or instead of the local control unit 113.

In its essential form, the method for the thermal conditioning of a thermoplastic spacer 3 according to the present invention comprises the steps of:
a) providing an apparatus 200 for the thermal conditioning as just described;
b) positioning a compartment 104 in alignment with the inlet area 124;
c) housing at least one glass sheet 2', 2'' arranged with thermoplastic spacer 3 in said compartment 104, 104', 104'';
d) thermal conditioning of said glass sheet 2', 2" arranged with thermoplastic spacer 3 in said compartment 104, 104', 104''; and
e) unloading the at least one glass sheet 2', 2" arranged with a thermoplastic spacer 3 from said compartment 104, 104', 104'' to the outlet area 125.

Advantageously, the steps b) and c) may be repeated to position glass sheets 2, 2', 2" with or without spacer 3 in said compartments 104, 104', 104'', by translation along a direction Z substantially perpendicular to the transit direction 126.

The method may also include a step in which the at least one temperature sensor 112 of the at least one compartment 104, 104', 104' measures the temperature of said thermoplastic spacer 3.

The local control unit 113 or an apparatus control unit 13 may be programmed to calculate, based on the temperature value detected by said at least one infrared temperature sensor 112 and/or said ambient temperature sensor 114, the residence time of a sheet 2', 2'' in one of said compartments 104, 104', 104'' so that the spacer 3 reaches a certain temperature value.

In more detail, starting from the state in which the unit 100 has a free compartment 104 aligned with the inlet conveyor 105 and the transport device 110 is in a raised position, a glass sheet 2 transits to occupy said compartment 104. Appropriate stop sensors (not shown in the figure because they are known per se to a person skilled in the art) allow the local control unit 113, or the apparatus control unit 13, to stop the glass sheet 2 in the correct position within the compartment 104. Similarly, the control unit 113, or the apparatus control unit 13, is able to verify that the glass sheet 2 has completely entered the interior of the compartment 104 and there is no protrusion of the glass sheet toward the inlet conveyor 105. Likewise, the control unit 113 or the apparatus control unit 13, by means of the production program data received from the company's management system, is able to determine whether, in the same compartment 104 occupied by the sheet 2, it is possible and convenient to also insert the corresponding sheet 2'. In the latter case, the two sheets 2 and 2' are inserted one after the other by the same movement via the inlet conveyor 105 and the transport system 110. Similarly, if there is space, additional glass sheets may be loaded into the same compartment 104.

Once the step of loading the compartment 104 with one or more glass sheets is complete, the means of movement 111 lower the transport device 110 so that the glass sheet, or glass sheets are supported by the fixed supports 118. At this point the series of compartments 104, 104', 104 ", etc., may move in translation along the Z-direction to place a different compartment 104', or 104 ", etc., in line with the inlet conveyors 105 and outlet conveyors 106 and, after raising the lower conveying device 110, to implement a further loading operation of other glass sheets, such as the glass sheet 2' (combined with the glass sheet 2 already loaded in the compartment 104) if, due to its size, it has not found space in the compartment 104. Alternatively and quite similarly, the control unit 113 or the apparatus control unit 13 may provide for the unloading of previously loaded glass sheets, ready for the next production steps.

Proceeding in the manner described above, with successive loading and unloading operations of the glass sheets 2 and 2', 2a, 2'a, etc., the unit 100 allows the various glass sheets 2', 2'a, etc. to reside for the time necessary for the thermoplastic spacer to reach the correct temperature. All this is done without slowing down the production process, which may continue with the usual cadence, since the successive production steps occur in the same time period, only shifted in time by an interval sufficient for the thermoplastic material bead 3, 3a, 3b, etc. to reach the desired temperature.

For the purpose of calculating the time required for sufficient conditioning of the thermoplastic material, the control unit 113 or the apparatus control unit 13 may consider, in addition to the ambient temperature and the temperature measured on the outer surface of the bead, also the size of the bead section, since greater mass corresponds to a longer time to obtain the desired characteristics within the bead. The thickness of the glass also obviously affects heat dissipation and is considered as a variable in the above-mentioned calculation: greater thickness corresponds to quicker cooling of the bead.

In order to make the determination of the best characteristics of the thermoplastic material even more precise, before continuing with the assembly and pressing step, a climatic chamber 140 may be adopted where the entire unit 100 may be inserted. Advantageously, a separate air-conditioning unit 142 may be adopted to provide the climatic chamber 140 with conditioned air either in case cooling is to be achieved or if the space inside the climatic chamber 140 is to be heated. In this way, the influence of ambient conditions on the phenomenon to be controlled is minimized, leaving only, as an externally dependent variable, the initial temperature of the glass.

Advantageously, whether or not the climate chamber 140 is adopted, convection may be forced by special ventilation system (or by the separate air-conditioning unit 142 itself) to control the flow of air hitting the glass panes equipped with spacer. This provides greater constancy of the ambient conditions and greater accuracy in calculating the time required for parking inside the unit 100.

Thus, in addition to obtaining the best characteristics of the thermoplastic material for the subsequent pressing step, the described unit, apparatus, and method also allow for the reduction of the material used (the 10-12% increase mentioned in paragraph [0007] ) to make the spacer because the necessary "push" toward the glass is provided by the higher viscosity of the material, and the extra material deposited during the extrusion step may be considerably reduced. Moreover, for the same reason, the thickness of the spacer, understood as the distance "t" between the surfaces not in contact with the glass, may also be reduced. All of this promotes lower production costs by using less thermoplastic material.

With the increased viscosity of the material in the steps following its application to the glass, the goals of making the end-of-line insulating glass unloading operations less risky and of reducing the effects of non-planarity of the used glass sheets due to the increased ability of the spacer to withstand stresses are also achieved.

The present invention is capable of numerous embodiment variants, all of which fall within the scope of equivalence to the inventive concept such as, for example and in particular, the solutions for lower and vertical support of the glass sheets, the construction details of which may be replaced with other equivalent ones, the drives, the recordings, and the means of actuation which may be electric, electrical-electronic, pneumatic, hydraulic, and/or combined, etc., the control means which may be electronic or fluidic and/or combined, etc.

A person skilled in the art may, in order to satisfy particular requirements, make modifications to the embodiments described above and/or substitute described elements with equivalent elements without thereby departing from the scope of the accompanying claims.

Mention is made, by way of example, but not exhaustively, of the possibility of replacing the outlet area 125 with the sheet coupling unit 12. Mention is made likewise of the inlet area 124, possibly replaced by the distribution unit 11 for thermoplastic spacers 3.

In addition, an insulating glass production line equipped with a device 100 as described above may use any type of spacer without modification, excluding the parking from the production cycle and using the unit 100 as a simple conveyor.

## Claims

1. Apparatus (200) for producing insulating glass comprising a thermoplastic spacer (3) distribution unit (11), a sheet coupling unit (12), and a thermal conditioning unit (100) for thermoplastic spacer for insulating glass (1), wherein the thermal conditioning unit (100) comprises an inlet area (124) for glass sheets (2, 2', 2") not yet coupled possibly provided with thermoplastic spacer (3), and an outlet area (125) for said glass sheets (2, 2', 2"), said inlet area (124) and said outlet area (125) defining a transit direction (126) for said sheets (2, 2', 2");
said unit (100) further comprising a fixed frame (101) and a movable frame (102), wherein said movable frame (102) is adapted to be moved with respect to said fixed frame (101) in a direction substantially perpendicular to said transit direction (126);
on said movable frame (102) being provided a plurality of compartments (104, 104', 104") adapted to house said glass sheets (2, 2', 2");
said movable frame (102) being adapted to position each compartment of said plurality of compartments (104, 104', 104") in line with said inlet area (124) and said outlet area (125) for said glass sheets (2, 2', 2").

2. Apparatus (200) for producing insulating glass according to the preceding claim, **characterised in that** said inlet area (124) comprises an inlet conveyor (105) for the support and transport of glass sheets (2, 2', 2") and said outlet area (125) comprises an outlet conveyor (106) for the support and transport of glass sheets (2, 2', 2").

3. Apparatus (200) for producing insulating glass according to the preceding claim, **characterised in that** said inlet conveyor (105) comprises a plurality of motorised rollers (116) for supporting and moving said glass sheets (2, 2', 2"), and a lateral support structure (108, 109) for a face of said glass sheets (2, 2'**,** 2"), comprising a plurality of wheels (107) adapted to allow the sliding of said glass sheets (2, 2', 2") according to a direction substantially parallel to the transit direction (126).

4. Apparatus (200) for producing insulating glass according to any one of the preceding claims, **characterised in that** each of said compartments (104, 104', 104") comprises fixed supports (118) adapted to support said glass sheets (2, 2', 2") from below, and a lateral support structure (119, 119', 119") for a face of said glass sheets, comprising a plurality of wheels (107) adapted to allow the sliding of said glass sheets (2, 2', 2") according to a direction substantially parallel to the transit direction (126).

5. Apparatus (200) for producing insulating glass according to the preceding claim, **characterised in that** said compartments (104, 104', 104") are adjacent to each other along a direction substantially perpendicular to the transit direction (126).

6. Apparatus (200) for producing insulating glass according to any one of the preceding claims, **characterised in that** it comprises a transport device (110) for moving said sheets (2, 2', 2") from said inlet area (124) to said outlet area (125) in a direction substantially parallel to the transit direction (126).

7. Apparatus (200) for producing insulating glass according to the preceding claim, **characterised in that** said transport device (110) is arranged on said fixed frame (101) by means of movement means (111) adapted to move said transport device (110) between an engagement position in which it is adapted to lift at least one sheet (2, 2', 2") and move it along the transit direction (126), and a rest position in which it does not interact with said at least one sheet (2, 2', 2").

8. Apparatus (200) for producing insulating glass according to the preceding claim, **characterised in that** said movement means (111) comprise at least one linear actuator (115), anchored at an end to said fixed frame (101) and at a second end to a lever (122) acting on a torsion bar (123) having a fixed axis of rotation, said torsion bar (123) being keyed with at least one toothed wheel (120) adapted to drive at least one corresponding rack (121) arranged on said transport device (110), said rack (121) being arranged according to a direction (Y) substantially parallel to the direction along which the transport device (110) is moved.

9. Apparatus (200) for producing insulating glass according to any one of the preceding claims, **characterised in that** each compartment (104, 104', 104") is provided with at least one temperature sensor (112) adapted to measure the temperature of a thermoplastic spacer (3).

10. Apparatus (200) for producing insulating glass according to the preceding claim, **characterised in that** said at least one temperature sensor (112) is an infrared sensor.

11. Apparatus (200) for producing insulating glass according to any one of claims 9-10, **characterised in that** said at least one temperature sensor (112) is positioned near the fixed supports (118) and is therefore adapted to detect a temperature value of the thermoplastic spacer (3).

12. Apparatus (200) for producing insulating glass according to any one of claims 9-11, **characterised in that** it comprises an ambient temperature sensor (114).

13. Apparatus (200) for producing insulating glass according to any one of claims 6-12, **characterised in that** it comprises a local control unit (113) operatively connected to said transport device (110) and/or to said movement means (111) and/or to said at least one temperature sensor (112) and/or to said ambient temperature sensor (114), said local control unit (113) being programmed for the management of the operating parameters of said conditioning unit (100).

14. Apparatus (200) for producing insulating glass according to the preceding claim, **characterised in that** said local control unit (113) is programmed to calculate the residence time of a sheet (2, 2', 2") in one of said compartments (104, 104', 104"), based on operative parameters entered by a user and/or predetermined times..

15. Apparatus (200) for producing insulating glass according to any one of claims 13-14, **characterised in that** said local control unit (113) is programmed to calculate, based on the temperature value detected by said at least temperature sensor (112) and/or said ambient temperature sensor (114), the residence time of a sheet (2', 2") in one of said compartments (104, 104', 104") so that the spacer (3) reaches a certain temperature value.

16. Apparatus (200) according to any one of the preceding claims, **characterized in that** said thermal conditioning unit (100) is interposed between said distribution unit (11) of thermoplastic spacer and said sheet coupling unit (12).

17. Apparatus (200) according to any one of the preceding claims, **characterised in that** it comprises an apparatus control unit (13), operatively connected to said thermoplastic spacer (3) distribution unit (11), to said sheet coupling unit (12), and to said thermal conditioning unit (100).

18. Apparatus (200) according to the preceding claim, **characterised in that** said apparatus control unit (13) is programmed to calculate based on the temperature value detected by said at least one infrared temperature sensor (112) and/or said ambient temperature sensor (114), the residence time of a sheet (2', 2") in one of said compartments (104) so that the spacer (3) reaches a certain temperature value.

19. Apparatus (200) according to any of the preceding claims, **characterised in that** the thermal conditioning unit is contained in a climatic chamber (140) suitable for both providing heat and for subtracting heat.

20. Apparatus (200) according to any one of the preceding claims, **characterized in that** each one of said compartments (104, 104', 104"), is not coplanar with the lateral support structures (108, 109) of the inlet conveyor (105) and of the outlet conveyor (106).

21. Method for the thermal conditioning of a thermoplastic spacer (3) comprising the steps of:
a) providing an apparatus (200) for producing insulating glass according to any one of claims 1-19;
b) positioning a compartment (104, 104', 104") in alignment with the inlet area (124);
c) housing at least one glass sheet (2, 2', 2") arranged or not with thermoplastic spacer (3) in said compartment (104, 104', 104");
d) thermal conditioning of said glass sheet (2, 2', 2") arranged with thermoplastic spacer (3) in said compartment (104, 104', 104"); and
e) unloading the at least one glass sheet (2, 2', 2") arranged with a thermoplastic spacer (3) from said compartment (104, 104', 104") to the outlet area (125).

22. Method according to claim 21, **characterised in that** said steps b) and c) are repeated to position glass sheets (2, 2', 2") with or without spacer (3) in said compartments (104, 104', 104"), by translation along a direction substantially perpendicular to the transit direction (126).

23. Method according to any one of claims 21-22, **characterised in that** it comprises a step in which said at least one temperature sensor (112) of said at least one compartment (104, 104', 104") measures the temperature of said thermoplastic spacer (3).

24. Method according to any one of claims 22-23, **characterised in that** it comprises a step wherein the control unit (113) is programmed to calculate the residence time of a sheet (2, 2', 2") in one of said compartments (104, 104', 104"), based on operative parameters entered by a user and/or predetermined times

25. Method according to the preceding claim, **characterized in that** it comprises a step in which the local control unit (113) or an apparatus control unit (13) calculates based on the temperature value detected by said at least one infrared temperature sensor (112) and/or said ambient temperature sensor (114), the residence time of a sheet (2, 2', 2") in one of said compartments (104, 104', 104") so that the spacer (3) reaches a certain temperature value.

## Patentansprüche

1. Vorrichtung (200) zur Herstellung von Isolierglas, umfassend eine Verteilungseinheit (11) für einen thermoplastischen Abstandshalter (3), eine Plattenkupplungseinheit (12) und eine Wärmekonditionierungseinheit (100) für den thermoplastischen Abstandshalter für Isolierglas (1), wobei die Wärmekonditionierungseinheit (100) einen Einlassbereich (124) für noch nicht gekoppelte Glasscheiben (2, 2', 2"), die gegebenenfalls mit einem thermoplastischen Abstandshalter (3) versehen sind, und einen Auslassbereich (125) für die besagten Glasscheiben (2, 2', 2") umfasst, wobei der besagte Einlassbereich (124) und der besagte Auslassbereich (125) eine Durchgangsrichtung (126) für die besagten Scheiben (2, 2', 2") definieren;
die besagte Einheit (100) umfasst ferner einen festen Rahmen (101) und einen beweglichen Rahmen (102), wobei der besagte bewegliche Rahmen (102) so ausgelegt ist, dass er relativ zum besagten festen Rahmen (101) in einer Richtung bewegt werden kann, die im Wesentlichen senkrecht zur besagten Durchgangsrichtung (126) steht;
auf dem besagten beweglichen Rahmen (102) sind mehrere Kammern (104, 104', 104") vorgesehen, die zur Aufnahme der besagten Glasscheiben (2, 2', 2") geeignet sind;
Der besagte bewegliche Rahmen (102) ist so ausgelegt, dass jede Kammer der besagten Vielzahl von Kammern (104, 104', 104") in einer Linie mit dem besagten Einlassbereich (124) und dem besagten Auslassbereich (125) für die besagten Glasscheiben (2, 2', 2") positioniert wird.

2. Vorrichtung (200) zur Herstellung von Isolierglas nach dem vorhergehenden Anspruch, **dadurch gekennzeichnet, dass** der besagte Einlassbereich (124) ein Einlassförderband (105) zur Aufnahme und zum Transport von Glasscheiben (2, 2', 2") umfasst und der besagte Auslassbereich (125) ein Auslassförderband (106) zur Aufnahme und zum Transport von Glasscheiben (2, 2', 2") umfasst.

3. Vorrichtung (200) zur Herstellung von Isolierglas nach dem vorhergehenden Anspruch, **dadurch gekennzeichnet, dass** das besagte Einlaufförderband (105) mehrere motorisierte Rollen (116) zum Tragen und Bewegen der besagten Glasscheiben (2, 2', 2") sowie eine seitliche Stützstruktur (108, 109) für eine Seite der besagten Glasscheiben (2, 2', 2") umfasst, die mehrere Räder (107) aufweist, die das Gleiten der besagten Glasscheiben (2, 2', 2") in einer im Wesentlichen parallel zur Durchgangsrichtung (126) verlaufenden Richtung ermöglichen.

4. Vorrichtung (200) zur Herstellung von Isolierglas nach jeglichem der vorhergehenden Ansprüche, **dadurch gekennzeichnet, dass** jede der besagten Kammern (104, 104', 104") feste Halterungen (118) zur Unterstützung der besagten Glasscheiben (2, 2', 2") von unten und eine seitliche Stützstruktur (119, 119', 119") für eine Seite der besagten Glasscheiben aufweist, die eine Vielzahl von Rädern (107) umfasst, die das Verschieben der besagten Glasscheiben (2, 2', 2") in einer Richtung ermöglichen, die im Wesentlichen parallel zur Durchgangsrichtung (126) verläuft.

5. Vorrichtung (200) zur Herstellung von Isolierglas nach dem vorhergehenden Anspruch, **dadurch gekennzeichnet, dass** die besagten Kammern (104, 104', 104") entlang einer im Wesentlichen senkrecht zur Durchgangsrichtung (126) verlaufenden Richtung aneinandergrenzen.

6. Vorrichtung (200) zur Herstellung von Isolierglas nach jeglichem der vorhergehenden Ansprüche, **dadurch gekennzeichnet, dass** sie eine Transportvorrichtung (110) zum Bewegen der besagten Scheiben (2, 2', 2") vom besagten Einlassbereich (124) zum besagten Auslassbereich (125) in einer im Wesentlichen parallel zur Durchgangsrichtung (126) verlaufenden Richtung umfasst.

7. Vorrichtung (200) zur Herstellung von Isolierglas nach dem vorhergehenden Anspruch, **dadurch gekennzeichnet, dass** die besagte Transportvorrichtung (110) auf dem besagten festen Rahmen (101) mittels eines Bewegungsmittels (111) angeordnet ist, das die besagte Transportvorrichtung (110) zwischen einer Eingriffsposition, in der sie mindestens eine Scheibe (2, 2', 2") anheben und in Durchgangsrichtung (126) bewegen kann, und einer Ruheposition, in der sie nicht mit der mindestens einen besagten Scheibe (2, 2', 2") interagiert, bewegt.

8. Vorrichtung (200) zur Herstellung von Isolierglas nach dem vorhergehenden Anspruch, **dadurch gekennzeichnet, dass** das besagte Bewegungsmittel (111) mindestens einen Linearantrieb (115) umfasst, der an einem Ende an dem besagten festen Rahmen (101) und an seinem anderen Ende an einem Hebel (122) befestigt ist, der auf einen Torsionsstab (123) mit einer festen Drehachse wirkt. Der besagte Torsionsstab (123) ist mit mindestens einem Zahnrad (120) verzahnt, das zum Antrieb mindestens einer entsprechenden Zahnstange (121) dient, die auf der besagten Transportvorrichtung (110) angeordnet ist. Die besagte Zahnstange (121) ist in einer Richtung (Y) angeordnet, die im Wesentlichen parallel zur Bewegungsrichtung der Transportvorrichtung (110) verläuft.

9. Vorrichtung (200) zur Herstellung von Isolierglas nach jeglichem der vorhergehenden Ansprüche, **dadurch gekennzeichnet, dass** jede Kammer (104, 104', 104") mit mindestens einem Temperatursensor (112) ausgestattet ist, der zur Messung der Temperatur eines thermoplastischen Abstandhalters (3) geeignet ist.

10. Vorrichtung (200) zur Herstellung von Isolierglas nach dem vorhergehenden Anspruch, **dadurch gekennzeichnet, dass** der besagte mindestens eine Temperatursensor (112) ein Infrarotsensor ist.

11. Vorrichtung (200) zur Herstellung von Isolierglas nach jeglichem der Ansprüche 9-10, **dadurch gekennzeichnet, dass** der besagte mindestens eine Temperatursensor (112) in der Nähe der festen Halterungen (118) angeordnet und daher geeignet ist, einen Temperaturwert des thermoplastischen Abstandhalters (3) zu erfassen.

12. Vorrichtung (200) zur Herstellung von Isolierglas nach jeglichem der Ansprüche 9-11, **dadurch gekennzeichnet, dass** sie einen Umgebungstemperatursensor (114) umfasst.

13. Vorrichtung (200) zur Herstellung von Isolierglas nach jeglichem der Ansprüche 6-12, **dadurch gekennzeichnet, dass** sie eine lokale Steuereinheit (113) umfasst, die mit der besagten Transportvorrichtung (110) und/oder mit dem besagten Bewegungsmittel (111) und/oder mit dem besagten mindestens einen Temperatursensor (112) und/oder mit dem besagten Umgebungstemperatursensor (114) operativ verbunden ist, wobei die besagte lokale Steuereinheit (113) für die Steuerung der Betriebsparameter der besagten Konditionierungseinheit (100) programmiert ist.

14. Vorrichtung (200) zur Herstellung von Isolierglas nach dem vorhergehenden Anspruch, **dadurch gekennzeichnet, dass** die besagte lokale Steuereinheit (113) so programmiert ist, dass sie die Verweilzeit einer Scheibe (2, 2', 2") in einer der besagten Kammern (104, 104', 104") auf der Grundlage von seitens der Benutzerperson eingegebenen Betriebsparametern und/oder vordefinierten Zeiten berechnet.

15. Vorrichtung (200) zur Herstellung von Isolierglas nach jeglichem der Ansprüche 13-14, **dadurch gekennzeichnet, dass** die besage lokale Steuereinheit (113) so programmiert ist, dass sie auf der Grundlage des von dem besagten mindestens einen Temperatursensor (112) und/oder dem besagten Umgebungstemperatursensor (114) erfassten Temperaturwerts die Verweilzeit einer Scheibe (2', 2") in einer der besagten Kammern (104, 104', 104") berechnet, damit der Abstandhalter (3) einen bestimmten Temperaturwert erreicht.

16. Vorrichtung (200) nach jeglichem der vorhergehenden Ansprüche, **dadurch gekennzeichnet, dass** die besagte Wärmekonditionierungseinheit (100) zwischen der Verteilereinheit (11) des thermoplastischen Abstandshalters und der besagten Plattenkopplungseinheit (12) angeordnet ist.

17. Vorrichtung (200) nach jeglichem der vorhergehenden Ansprüche, **dadurch gekennzeichnet, dass** sie eine Vorrichtungssteuereinheit (13) umfasst, die mit der besagten thermoplastischen Abstandshaltereinheit (3) Verteilereinheit (11), der besagten Plattenkopplungseinheit (12) und der besagten Wärmekonditionierungseinheit (100) funktionell verbunden ist.

18. Vorrichtung (200) nach dem vorhergehenden Anspruch, **dadurch gekennzeichnet, dass** die besagte Steuereinheit (13) der Vorrichtung so programmiert ist, dass sie auf Grundlage des von dem besagten mindestens einen Infrarot-Temperatursensor (112) und/oder dem besagten Umgebungstemperatursensor (114) erfassten Temperaturwerts die Verweilzeit eines Blechs (2', 2") in einer der besagten Kammern (104) berechnet, damit der Abstandshalter (3) einen bestimmten Temperaturwert erreicht.

19. Vorrichtung (200) nach jeglichem der vorhergehenden Ansprüche, **dadurch gekennzeichnet, dass** die thermische Konditionierungseinheit in einer Klimakammer (140) enthalten ist, die sowohl zur Wärmezufuhr als auch zur Wärmeabfuhr geeignet ist.

20. Vorrichtung (200) nach jeglichem der vorhergehenden Ansprüche, **dadurch gekennzeichnet, dass** jede der besagten Kammern (104, 104', 104") nicht in einer Ebene mit den seitlichen Stützstrukturen (108, 109) des Einlaufförderers (105) und des Auslaufförderers (106) liegt.

21. Verfahren zur thermischen Konditionierung eines thermoplastischen Abstandhalters (3), umfassend die folgenden Schritte:
a) Bereitstellung einer Vorrichtung (200) zur Herstellung von Isolierglas nach jeglichem der Ansprüche 1-19;
b) Positionierung einer Kammer (104, 104', 104") in Ausrichtung auf den Einlaufbereich (124);
c) Aufnahme von mindestens einer Glasscheibe (2, 2', 2"), die gegebenenfalls mit einem thermoplastischen Abstandshalter (3) in der besagten Kammer (104, 104', 104") angeordnet ist;
d) thermische Konditionierung der besagten Glasscheibe (2, 2', 2"), die mit einem thermoplastischen Abstandshalter (3) in der besagten Kammer (104, 104', 104") angeordnet ist; und
e) Entladen der mindestens einen Glasscheibe (2, 2', 2"), die mit einem thermoplastischen Abstandshalter (3) versehen ist, aus der besagten Kammer (104, 104', 104") in den Auslassbereich (125).

22. Verfahren nach Anspruch 21, **dadurch gekennzeichnet, dass** die besagten Schritte b) und c) wiederholt werden, um Glasscheiben (2, 2', 2") mit oder ohne Abstandshalter (3) in den besagten Kammern (104, 104', 104") durch Translation entlang einer im Wesentlichen senkrecht zur Durchgangsrichtung (126) verlaufenden Richtung zu positionieren.

23. Verfahren nach jeglichem der Ansprüche 21-22, **dadurch gekennzeichnet, dass** es einen Schritt umfasst, in dem der besagte mindestens eine Temperatursensor (112) der besagten mindestens einen Kammer (104, 104', 104") die Temperatur des besagten thermoplastischen Abstandshalters (3) misst.

24. Verfahren nach jeglichem der Ansprüche 22-23, **dadurch gekennzeichnet, dass** es einen Schritt umfasst, in dem die Steuereinheit (113) so programmiert wird, dass sie die Verweilzeit eines Blattes (2, 2', 2") in einer der besagten Kammern (104, 104', 104") auf der Grundlage von seitens der Benutzerperson eingegebenen Betriebsparametern und/oder vordefinierten Zeiten berechnet

25. Verfahren nach dem vorhergehenden Anspruch, **dadurch gekennzeichnet, dass** es einen Schritt umfasst, in dem die lokale Steuereinheit (113) oder eine Gerätesteuereinheit (13) auf der Grundlage des von dem besagten mindestens einen Infrarot-Temperatursensor (112) und/oder dem besagten Umgebungstemperatursensor (114) erfassten Temperaturwerts die Verweilzeit eines Blechs (2, 2', 2") in einer der besagten Kammern (104, 104', 104") berechnet, sodass der Abstandshalter (3) einen bestimmten Temperaturwert erreicht.

## Revendications

1. Appareil (200) de production de vitrage isolant comprenant une unité de distribution (11) d'intercalaire thermoplastique (3), une unité de couplage de feuille (12) et une unité de conditionnement thermique (100) pour intercalaire thermoplastique pour vitrage isolant (1), dans lequel l'unité de conditionnement thermique (100) comprend une zone d'entrée (124) pour des feuilles de verre (2, 2', 2") non encore couplées éventuellement pourvues d'intercalaire thermoplastique (3), et une zone de sortie (125) pour lesdites feuilles de verre (2, 2', 2"), ladite zone d'entrée (124) et ladite zone de sortie (125) définissant une direction de transit (126) pour lesdites feuilles (2, 2', 2") ;
ladite unité (100) comprenant en outre un châssis fixe (101) et un châssis mobile (102), dans lequel ledit châssis mobile (102) est adapté pour être déplacé par rapport audit châssis fixe (101) dans une direction sensiblement perpendiculaire à ladite direction de transit (126) ;
sur ledit châssis mobile (102) étant prévue une pluralité de compartiments (104, 104', 104") adaptés pour loger lesdites feuilles de verre (2, 2', 2") ;
ledit châssis mobile (102) étant adapté pour positionner chaque compartiment de ladite pluralité de compartiments (104, 104', 104") en ligne avec ladite zone d'entrée (124) et ladite zone de sortie (125) pour lesdites feuilles de verre (2, 2', 2").

2. Appareil (200) de production de vitrage isolant selon la revendication précédente, **caractérisé en ce que** ladite zone d'entrée (124) comprend un convoyeur d'entrée (105) pour le support et le transport des feuilles de verre (2, 2', 2") et ladite zone de sortie (125) comprend un convoyeur de sortie (106) pour le support et le transport des feuilles de verre (2, 2', 2").

3. Appareil (200) de production de vitrage isolant selon la revendication précédente, **caractérisé en ce que** ledit convoyeur d'entrée (105) comprend une pluralité de rouleaux motorisés (116) pour supporter et déplacer lesdites feuilles de verre (2, 2', 2"), et une structure de support latérale (108, 109) pour une face desdites feuilles de verre (2, 2', 2"), comprenant une pluralité de roues (107) adaptées pour permettre le glissement desdites feuilles de verre (2, 2', 2") selon une direction sensiblement parallèle à la direction de transit (126).

4. Appareil (200) de production de vitrage isolant selon l'une quelconque des revendications précédentes, **caractérisé en ce que** chacun desdits compartiments (104, 104', 104") comprend des supports fixes (118) adaptés pour supporter lesdites feuilles de verre (2, 2', 2") par le bas, et une structure de support latérale (119, 119', 119") pour une face desdites feuilles de verre, comprenant une pluralité de roues (107) adaptées pour permettre le glissement desdites feuilles de verre (2, 2', 2") selon une direction sensiblement parallèle à la direction de transit (126).

5. Appareil (200) de production de vitrage isolant selon la revendication précédente, **caractérisé en ce que** lesdits compartiments (104, 104', 104") sont adjacents les uns aux autres le long d'une direction sensiblement perpendiculaire à la direction de transit (126).

6. Appareil (200) de production de vitrage isolant selon l'une quelconque des revendications précédentes, **caractérisé en ce qu'**il comprend un dispositif de transport (110) pour déplacer lesdites feuilles (2, 2', 2") de ladite zone d'entrée (124) à ladite zone de sortie (125) dans une direction sensiblement parallèle à la direction de transit (126).

7. Appareil (200) de production de vitrage isolant selon la revendication précédente, **caractérisé en ce que** ledit dispositif de transport (110) est disposé sur ledit châssis fixe (101) au moyen de moyens de déplacement (111) adaptés pour déplacer ledit dispositif de transport (110) entre une position d'engagement dans laquelle il est adapté pour soulever au moins une feuille (2, 2', 2") et la déplacer le long de la direction de transit (126), et une position de repos dans laquelle il n'interagit pas avec ladite au moins une feuille (2, 2', 2").

8. Appareil (200) de production de vitrage isolant selon la revendication précédente, **caractérisé en ce que** lesdits moyens de déplacement (111) comprennent au moins un actionneur linéaire (115), ancré à une extrémité audit châssis fixe (101) et à une deuxieme extrémité à un levier (122) agissant sur une barre de torsion (123) ayant un axe de rotation fixe, ladite barre de torsion (123) étant clavetée avec au moins une roue dentée (120) adaptée pour entraîner au moins une crémaillère correspondante (121) disposée sur ledit dispositif de transport (110), ladite crémaillère (121) étant disposée selon une direction (Y) sensiblement parallèle à la direction le long de laquelle le dispositif de transport (110) est déplacé.

9. Appareil (200) de production de vitrage isolant selon l'une quelconque des revendications précédentes, **caractérisé en ce que** chaque compartiment (104, 104', 104") est pourvu d'au moins un capteur de température (112) adapté pour mesurer la température d'un intercalaire thermoplastique (3).

10. Appareil (200) de production de vitrage isolant selon la revendication précédente, **caractérisé en ce que** ledit au moins un capteur de température (112) est un capteur infrarouge.

11. Appareil (200) de production de vitrage isolant selon l'une quelconque des revendications 9-10, **caractérisé en ce que** ledit au moins un capteur de température (112) est positionné à proximité des supports fixes (118) et est donc adapté pour détecter une valeur de température de l'intercalaire thermoplastique (3).

12. Appareil (200) de production de vitrage isolant selon l'une quelconque des revendications 9 à 11, **caractérisé en ce qu'**il comprend un capteur de température ambiante (114).

13. Appareil (200) de production de vitrage isolant selon l'une quelconque des revendications 6 à 12, **caractérisé en ce qu'**il comprend une unité de commande locale (113) connectée de manière fonctionnelle audit dispositif de transport (110) et/ou auxdits moyens de déplacement (111) et/ou audit au moins un capteur de température (112) et/ou audit capteur de température ambiante (114), ladite unité de commande locale (113) étant programmée pour la gestion des paramètres de fonctionnement de ladite unité de conditionnement (100).

14. Appareil (200) de production de vitrage isolant selon la revendication précédente, **caractérisé en ce que** ladite unité de commande locale (113) est programmée pour calculer le temps de séjour d'une feuille (2, 2', 2") dans l'un desdits compartiments (104, 104', 104 "), en fonction de paramètres opérationnels saisis par un utilisateur et/ou de temps prédéterminés.

15. Appareil (200) de production de vitrage isolant selon l'une quelconque des revendications 13-14, **caractérisé en ce que** ladite unité de commande locale (113) est programmée pour calculer, sur la base de la valeur de température détectée par ledit au moins capteur de température (112) et/ou ledit capteur de température ambiante (114), le temps de séjour d'une feuille (2', 2") dans l'un desdits compartiments (104, 104', 104") de sorte que l'intercalaire (3) atteigne une certaine valeur de température.

16. Appareil (200) selon l'une quelconque des revendications précédentes, **caractérisé en ce que** ladite unité de conditionnement thermique (100) est interposée entre ladite unité de distribution (11) d'intercalaire thermoplastique et ladite unité de couplage de feuilles (12).

17. Appareil (200) selon l'une quelconque des revendications précédentes, **caractérisé en ce qu'**il comprend une unité de commande d'appareil (13), connectée de manière fonctionnelle à ladite unité de distribution (11) d'intercalaire thermoplastique (3), à ladite unité de couplage de feuilles (12) et à ladite unité de conditionnement thermique (100).

18. Appareil (200) selon la revendication précédente, **caractérisé en ce que** ladite unité de commande d'appareil (13) est programmée pour calculer, sur la base de la valeur de température détectée par ledit au moins un capteur de température infrarouge (112) et/ou ledit capteur de température ambiante (114), le temps de séjour d'une feuille (2', 2") dans l'un desdits compartiments (104) de sorte que l'intercalaire (3) atteigne une certaine valeur de température.

19. Appareil (200) selon l'une quelconque des revendications précédentes, **caractérisé en ce que** l'unité de conditionnement thermique est contenue dans une chambre climatique (140) appropriée à la fois pour fournir de la chaleur et pour soustraire de la chaleur.

20. Appareil (200) selon l'une quelconque des revendications précédentes, **caractérisé en ce que** chacun desdits compartiments (104, 104', 104") n'est pas coplanaire avec les structures de support latérales (108, 109) du convoyeur d'entrée (105) et du convoyeur de sortie (106).

21. Procédé de conditionnement thermique d'un intercalaire thermoplastique (3) comprenant les étapes suivantes :
a) la fourniture d'un appareil (200) de production de vitrage isolant selon l'une quelconque des revendications 1 à 19 ;
b) le positionnement d'un compartiment (104, 104', 104") en alignement avec la zone d'entrée (124) ;
c) le logement d'au moins une feuille de verre (2, 2', 2") munie ou non d'un intercalaire thermoplastique (3) dans ledit compartiment (104, 104', 104") ;
d) le conditionnement thermique de ladite feuille de verre (2, 2', 2") muni d'une intercalaire thermoplastique (3) dans ledit compartiment (104, 104', 104") ; et
e) le déchargement de l'au moins une feuille de verre (2, 2', 2") munie d'un intercalaire thermoplastique (3) depuis ledit compartiment (104, 104', 104") vers la zone de sortie (125).

22. Procédé selon la revendication 21, **caractérisé en ce que** lesdites étapes b) et c) sont répétées pour positionner des feuilles de verre (2, 2', 2") avec ou sans intercalaire (3) dans lesdits compartiments (104, 104', 104"), par translation le long d'une direction sensiblement perpendiculaire à la direction de transit (126).

23. Procédé selon l'une quelconque des revendications 21-22, **caractérisé en ce qu'**il comprend une étape dans laquelle ledit au moins un capteur de température (112) dudit au moins un compartiment (104, 104', 104") mesure la température dudit intercalaire thermoplastique (3).

24. Procédé selon l'une quelconque des revendications 22-23, **caractérisé en ce qu'**il comprend une étape dans laquelle l'unité de commande (113) est programmée pour calculer le temps de séjour d'une feuille (2, 2', 2") dans l'un desdits compartiments (104, 104', 104"), en fonction de paramètres opérationnels saisis par un utilisateur et/ou de temps prédéterminés

25. Procédé selon la revendication précédente, **caractérisé en ce qu'**il comprend une étape dans laquelle l'unité de commande locale (113) ou une unité de commande d'appareil (13) calcule, sur la base de la valeur de température détectée par ledit au moins un capteur de température infrarouge (112) et/ou ledit capteur de température ambiante (114), le temps de séjour d'une feuille (2, 2', 2") dans l'un desdits compartiments (104, 104', 104") de sorte que l'intercalaire (3) atteigne une certaine valeur de température.
